# DEMANDE DE BREVET EUROPEEN

(11) **EP 0 621 597 A1**
(43) Date de publication de la demande: **26.10.1994**
(21) Numéro de dépôt: 93440037.5
(22) Date de dépôt: 23.04.1993
(51) Int. Cl.: G11B 23/023, G11B 33/04

(54) **Dispositif pour le rangement de vidéo-cassettes**

(71) Demandeur: Woytasik, Raymond, F-59300 Valenciennes (FR)
(72) Inventeur: Woytasik, Raymond, F-59300 Valenciennes (FR)
(74) Mandataire: Bossard, Jacques-René

(57) **Abrégé**

Dispositif pour le rangement d'un ensemble d'objets plats sensiblement identiques K, notamment des cassettes de bandes vidéo, du type se composant d'une paroi périphérique (2, 4, 6, 9) entourant les faces latérales dudit ensemble et d'un fond arrière (1) contre lequel s'appuient les faces avant desdits objets, à l'opposé d'une fenêtre pour leur mise en place et leur extraction,
caractérisé en ce que, en vue de faciliter ladite extraction de l'un quelconque desdits objets dudit ensemble, notamment quand ces objets sont maintenus serrés les uns contre les autres, ledit fond arrière (1) comporte, dans une zone approximativement à mi-hauteur desdites faces avant, un élément horizontal en relief (12) perpendiculaire au plan desdites faces avant, cet élément constituant un axe de basculement pour lesdits objets, une pression exercée sur une portion située au-dessous du niveau dudit axe de la face arrière de l'un desdits objets ayant pour effet, par basculement dudit objet autour dudit axe, d'enfoncer la portion de ladite face arrière sur laquelle est exercée cette pression, ce qui dégage en même temps en partie les faces latérales correpondantes de l'objet contigu demeuré immobile, ce qui en permet la préhension et l'extraction par simple translation vers l'avant.

## Description

La présente invention concerne un dispositif perfectionné pour le rangement d'un ensemble d'objets plats sensiblement identiques, dont des exemples non limitatifs sont les cassettes audio ou vidéo, les disques, disquettes, ou bien les collections de livres ou albums, et analogues.

Ce dispositif consiste essentiellement en un volume de classement ouvert sur sa face avant pour permettre la mise en place et l'extraction d'objets dont les faces latérales sont enveloppées par sa paroi périphérique, et qui s'appuient par leur face avant sur un fond arrière dudit volume.

D'une manière générale, de tels volumes sont prévus pour un nombre déterminé d'objets qui, quand ils sont tous en place, sont relativement serrés les uns contre les autres, de sorte qu'ils forment une sorte de bloc compact n'offrant à l'extérieur aucune prise, ce qui rend difficile la sélection et l'extraction de l'un quelconque de ces objets.

L'invention vise à remédier à cet inconvénient, grâce à un aménagement de ce dispositif. A cet effet, selon l'invention, en vue de faciliter ladite extraction de l'un quelconque desdits objets dudit ensemble, notamment quand ces objets sont maintenus serrés les uns contre les autres, ledit fond arrière comporte, dans une zone approximativement à mi-hauteur desdites faces avant, un élément en relief perpendiculaire au plan desdites faces avant, cet élément constituant un axe de basculement pour lesdits objets, une pression exercée sur un point quelconque de la face arrière de l'un desdits objets situé au-dessous du niveau dudit axe ayant pour effet, par basculement dudit objet autour dudit axe, d'enfoncer la portion de ladite face arrière sur laquelle est exercée cette pression, ce qui dégage en même temps en partie les faces latérales correspondantes de l'objet contigu demeuré immobile, ce qui en permet la préhension et l'extraction par simple translation vers l'avant.

L'élément de basculement pourrait être un barreau de section quelconque rapporté horizontalement sur le fond du dispositif, mais selon une réalisation préférentielle de l'invention, il consiste en un bourrelet horizontal, résultant lui-même du repli de l'un des panneaux constituant le dispositif, ce repli venant en butée contre une languette pratiquée à une certaine distance de l'arète du dispositif, de façon à demeurer en relief convexe par rapport au fond.

De préférence, le dispositif est créé à partir d'un plan unique en matériau semi-rigide, tel que matière plastique ou carton, replié ou accroché sur lui-même de manière à former la paroi périphérique, le fond et ledit bourrelet.

On comprendra mieux l'invention en se référant à la description suivante, correspondant au dessin annexé, sur lequel :
La figure 1 représente un flan à partir duquel est créé le dispositif selon l'invention.
La figure 2 représente en perspective le dispositif selon l'invention créé par repliage et assemblage des éléments du flan de la figure 1.
La figure 3 représente une coupe verticale suivant 3-3 de la figure 2.
La figure 4 est une vue semblable à la figure 2, le dispositif étant rempli de cassettes.
Les figures 5A, 5B et 5C sont des vues analogues à la figure 4, montrant le processus d'extraction d'une cassette grâce à la caractéristique faisant l'objet de la présente invention et,
Les figures 6A, 6B et 6C sont des vues analogues aux figures 5A, 5B et 5C, dans le cas où la cassette à extraire est située à l'extrémité d'une rangée.

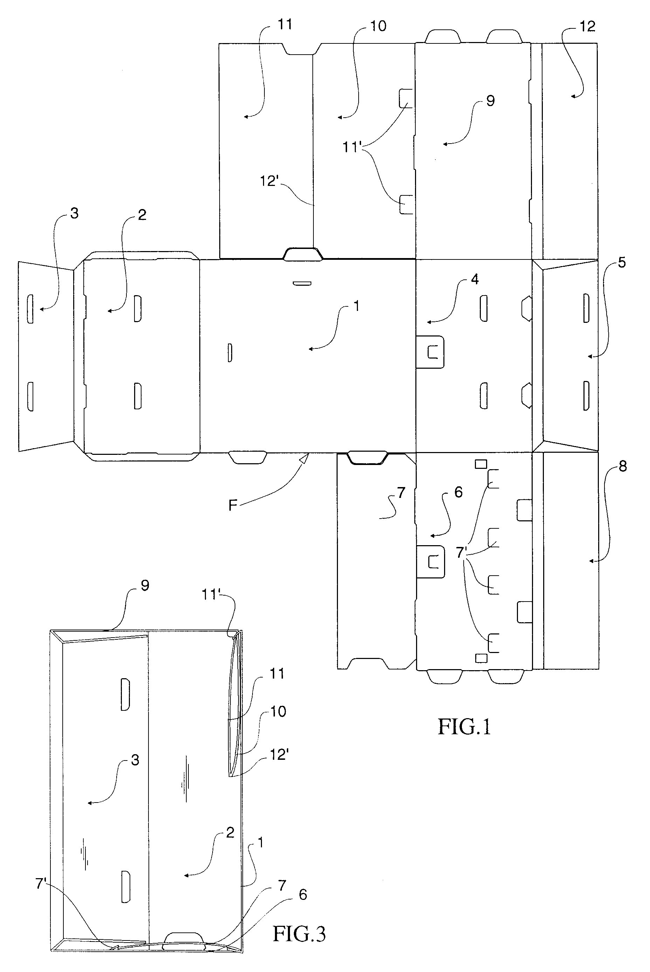

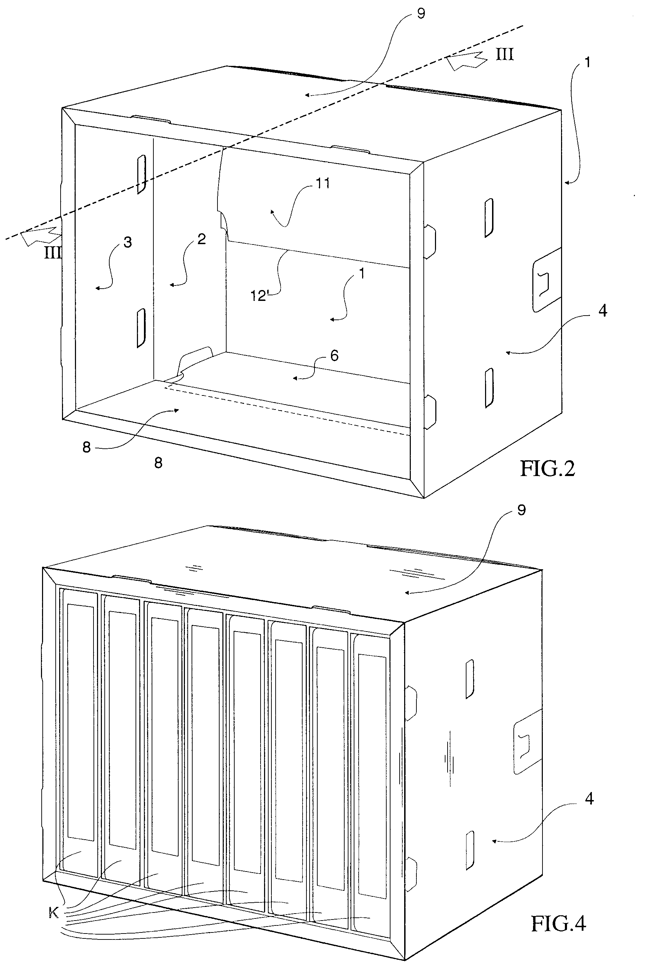

Si l'on se réfère en premier lieu aux figures 1 à 4, on constate que le dispositif selon l'invention se compose, de façon connue, d'un volume de rangement constitué par un flan F, en un matériau semi-rigide approprié tel que de la matière plastique ou du carton, ce flan étant découpé et rainé comme il est apparent sur la figure 1, de manière à constituer une série de panneaux jouant les rôles suivants :
Le panneau 1 constitue le fond arrière proprement dit du volume de classement, et il est délimité par une paroi périphérique constituée par des panneaux attenants 2, 4, 6 et 9, constituant une fois assemblés un cadre rectangulaire délimitant la périphérie latérale du bloc constitué par l'ensemble de cassettes K₁, K₂, K₃ ..., Kₙ comme il apparaît sur la figure 4.

Dans ce mode de réalisation, comme il est usuel, les panneaux 2, 4, 6 et 9 sont complétés par des rabats 3, 5, 8 et 12, dont les zones de repliement par dessus les panneaux 2, 4, 6 et 9 sont légèrement biseautées de manière à faciliter l'introduction des cassettes K dans le volume de classement.

Il est clair que, une fois l'ensemble des cassettes K introduit dans le volume de classement ainsi défini de manière connue, il est assez difficile d'extraire une cassette de l'ensemble ainsi constitué, du fait que toutes les cassettes étant identiques, leurs dos sont situés dans le même plan, et qu'ainsi aucun jeu ne subsiste entre les cassettes entre elles, ni entre les cassettes et les différents rabats 3, 5, 8 et 12.

C'est pourquoi, selon l'invention, dans le but de faciliter la sélection et l'extraction d'une cassette, un moyen est prévu de manière à permettre, en vue de l'extraction d'une cassette, son dégagement par basculement d'au moins l'une des cassettes qui lui sont contiguës.

A cet effet, et comme il apparaît au dessin, l'un des panneaux 1 ou 9, et, dans le cas représenté, le panneau horizontal supérieur 9, est prolongé par un premier panneau complémentaire 10, replié à 90° vers le bas, c'est à dire contre le panneau vertical 1, puis par un second panneau complémentaire 11, replié 360° vers le haut, autour d'un pli horizontal 12', ce panneau 11 ayant sensiblement la même hauteur que le panneau 10, mais butant par son bord horizontal supérieur contre des languettes 11' prédécoupées dans le panneau 10 de telle manière que ce panneau 11 est déformé pour constituer un bourrelet convexe, comme il apparaît notamment sur la figure 3.

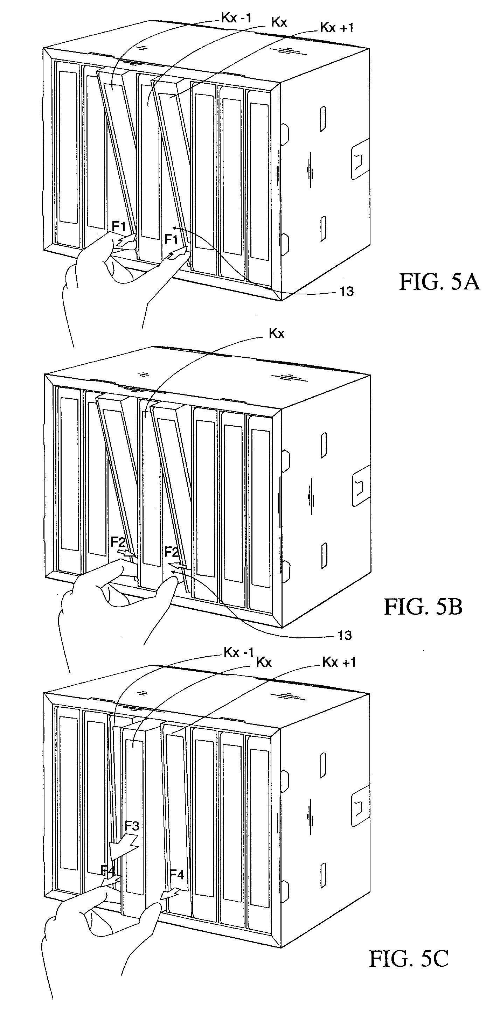

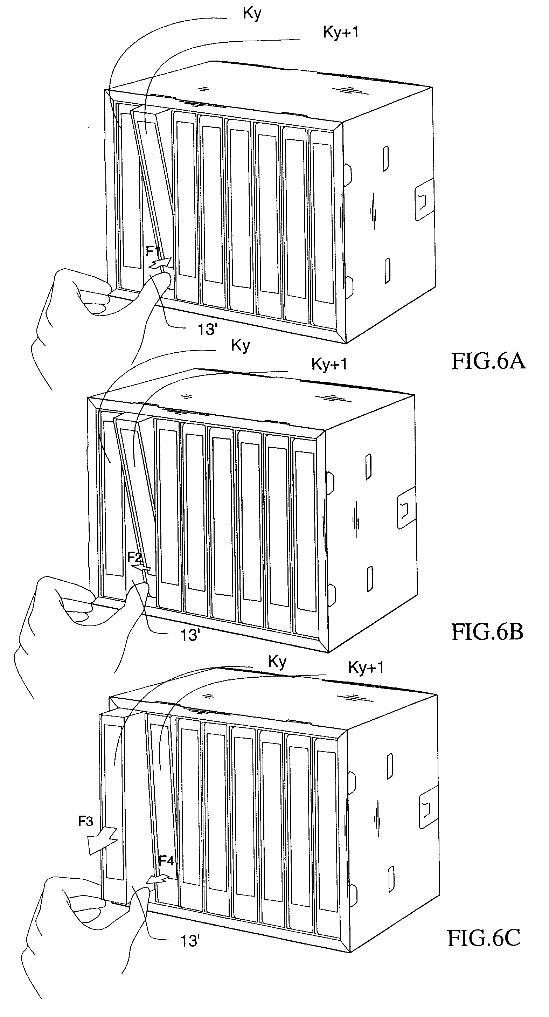

De cette manière, le pli intermédiaire horizontal 12' de ce bourrelet constitue, pour les cassettes K entassées dans le volume de rangement, un axe de basculement qui facilite leur extraction comme il est indiqué ci-après avec référence aux séries de figures 5 et 6 :

En se référant tout d'abord aux figures 5A, 5B, 5C, on voit sur la figure 5A qu'une pression horizontale F₁, exercée par deux doigts sur la portion inférieure de cassettes Kₓ₋₁ et Kₓ₊₁ contiguës de chaque côté d'une cassette Kₓ à extraire, a pour effet, par basculement autour de l'axe 12', d'enfoncer la base de chaque cassette Kₓ₋₁ et Kₓ₊₁ par rapport aux autres cassettes, en dégageant ainsi les faces latérales de la cassette Kₓ ; il est alors possible, avec les mêmes doigts, d'exercer sur ces faces latérales 13 une pression F₂ en pinçant ainsi la cassette Kₓ (figure 5B), et il suffit de tirer ladite cassette Kₓ vers soi (en direction F₃ sur la figure 5C) pour l'extraire de l'ensemble par simple translation. Dans le même temps, les cassettes Kₓ₋₁ et Kₓ₊₁ basculent d'elles-mêmes en sens contraire (F₄) et reprennent leur position initiale.

Pour faciliter à la fois cette extraction de la cassette Kₓ et le retour spontané des cassettes Kₓ₋₁ et Kₓ₊₁, il est prévu, selon une caractéristique subsidiaire de l'invention, de rendre plus élastique le déplacement des cassettes grâce au fait que l'ensemble des cassettes est monté sur un bourrelet élastique formé par un repli 7 du panneau 6, le bord extérieur du panneau 7 venant buter contre une languette 7' du panneau 6 comme représenté sur la figure 3.

Les figures 6A, 6B et 6C illustrent le même processus, mais dans le cas où la cassette à extraire K_{y} est située à une extrémité de l'ensemble, c'est à dire qu'une seule de ses faces latérales à savoir 13', peut être dégagée par l'enfoncement de la cassette contiguë K_{y+1}, le pincement étant remplacé par une simple poussée F₂ vers la cloison correspondante 2 de la périphérie latérale du volume de rangement.

Dans les deux cas, les cassettes individuelles sont donc aisément accessibles tout en demeurant parfaitement immobilisées dans le volume de classement.

Bien entendu, bien qu'il soit plus commode de réaliser le flan F en une seule pièce par découpage d'une feuille de matière plastique ou de carton , il est possible de le constituer en plusieurs éléments assemblés entre eux par des systèmes de languettes et d'encoches de manière connue en soi.

L'invention n'est donc pas limitée au mode de réalisation illustré par les figures 1 à 3, mais en couvre au contraire toutes les variantes, permettant sa mise en oeuvre conformément au processus illustré par les figures 5 et 6.

Ainsi, le bourrelet autour duquel bascule la ou les cassettes sur la base desquelles est exercée une pression, peut être créé par des panneaux prolongeant indifféremment l'un des panneaux 1 ou 9, dès lors que ce panneau présente une arète horizontale supérieure parallèle au plan des faces avant des cassettes.

De même, la construction du dispositif peut résulter du repliage et de l'accrochage de panneaux dont l'ensemble est différent du flan représenté à la figure 1, par exemple pour respecter un aspect esthétique, ou pour faciliter l'accrochage de plusieurs dispositifs les uns aux autres.

## Revendications

1. Dispositif pour le rangement d'un ensemble d'objets plats sensiblement identiques K, notamment des cassettes de bandes vidéo, du type se composant d'une paroi périphérique (2, 4, 6, 9) entourant les faces latérales dudit ensemble et d'un fond arrière (1) contre lequel s'appuient les faces avant desdits objets, à l'opposé d'une fenêtre pour leur mise en place et leur extraction,
caractérisé en ce que, en vue de faciliter ladite extraction de l'un quelconque desdits objets dudit ensemble, notamment quand ces objets sont maintenus serrés les uns contre les autres, ledit fond arrière (1) comporte, dans une zone approximativement à mi-hauteur desdites faces avant, un élément horizontal en relief (12) perpendiculaire au plan desdites faces avant, cet élément constituant un axe de basculement pour lesdits objets, une pression exercée sur une portion située au-dessous du niveau dudit axe de la face arrière de l'un desdits objets ayant pour effet, par basculement dudit objet autour dudit axe, d'enfoncer la portion de ladite face arrière sur laquelle est exercée cette pression, ce qui dégage en même temps en partie les faces latérales correpondantes de l'objet contigu demeuré immobile, ce qui en permet la préhension et l'extraction par simple translation vers l'avant.

2. Dispositif selon la revendication 1, caractérisé en ce que l'élément de basculement est constitué par un bourrelet créé sur un des éléments du flan constituant le dispositif.

3. Dispositif selon la revendication 2, caractérisé en ce que ledit bourrelet est constitué par repli sur lui-même d'un panneau prolongeant l'un des éléments constituant la paroi périphérique du dispositif, ce repli prenant un aspect en relief convexe par butée sur une languette pratiquée dans ledit élément.

4. Dispositif selon la revendication 3, caractérisé en ce que ledit repli est pratiqué sur l'arète horizontale arrière dudit fond arrière ou de la paroi horizontale supérieure du dispositif, ledit bourrelet résultant de la création d'une surface verticale convexe contre ledit fond arrière.

5. Dispositif selon l'une quelconque des revendications précédentes, caractérisé en ce qu'il comporte au surplus un second bourrelet, résultant d'un repli pratiqué sur l'arète horizontale inférieure dudit fond ou sur l'arète horizontale arrière de la paroi horizontale inférieure du dispositif, ledit bourrelet résultant de la création d'une surface horizontale convexe contre ladite paroi inférieure.

6. Dispositif selon l'une quelconque des revendications 1 à 5, caractérisé en ce que ledit dispositif est constitué à partir d'un flan unique en matériau semi-rigide tel que du carton, une matière plastique ou analogue.
